# EUROPÄISCHE PATENTANMELDUNG

(11) **EP 1 431 599 A1**
(43) Veröffentlichungstag der Anmeldung: **23.06.2004**
(21) Anmeldenummer: 03027732.1
(22) Anmeldetag: 02.12.2003
(51) Int. Cl.: F16C 19/52, H02K 11/00

(54) **Elektrische Maschine, insbesondere Generator für eine Windenergieanlage, sowie Notstopschalter für eine elektrische Maschine**

(30) Priorität: 17.12.2002 DE 10259089
(71) Anmelder: SIEMENS AKTIENGESELLSCHAFT, 80333 München (DE)
(72) Erfinder: Noe, Ernst-Ludwig, 91336 Heroldsbach (DE)

(57) **Zusammenfassung**

Die Erfindung betrifft eine elektrische Maschine (1), insbesondere einen Generator für eine Windenergieanlage, mit einem eine Statorwicklung tragenden Stator, der in einem Gehäuse drehfest um einen mit einer Läuferwicklung versehenen Läufer herum angeordnet ist, welcher auf einer über Drehlager (4) am Gehäuse abgestützten Maschinenwelle (5) sitzt. Um Lagerschäden frühzeitig zu erkennen, wird vorgeschlagen, dass am Gehäuse ein Sensor (9) fest angeordnet ist, der jeweils seinen Abstand zur Maschinenwelle (5) erfasst und ein Stopsignal abgibt, wenn dieser Abstand einen vorgegebenen Wert unter- oder überschreitet

## Beschreibung

Die Erfindung betrifft eine elektrische Maschine, insbesondere einen Generator für eine Windenergieanlage, sowie einen Notstopschalter für eine elektrische Maschine gemäß den Oberbegriffen der Ansprüche 1 und 6.

Elektrische Maschinen, die als Generator und/oder als Motor betreibbar sind, sind allgemein bekannt, beispielsweise aus der DE 198 08 797 C2. Derartige Maschinen besitzen ein Motorgehäuse, in dem eine Maschinenwelle drehgelagert angeordnet ist. Sie umfassen weiter einen Stator mit einer Statorwicklung und einen Läufer mit einer Läuferwicklung, wobei der Läufer drehfest auf der Maschinenwelle angeordnet ist. Deckelartig ausgebildete Lagerschilde dienen dem stirnseitigen Verschließen des Gehäuses. Jedes Lagerschild weist eine Öffnung auf, in das jeweils ein Drehlager eingesetzt ist, über das die Maschinenwelle abgestützt ist. Die Drehlager können als Wälzlager ausgebildet sein, mit einem inneren und einem äußeren Lagerring sowie dazwischen angeordneten Wälzkörpern, z.B. Kugeln oder Walzen. Die axiale Sicherung der Drehlager erfolgt meist mittels eines Sicherungsrings. Zum Schutz der Drehlager wird häufig eine deckelartige Abdeckung in Form eines Lagerdeckels verwendet.

Weiter ist es bekannt, elektrische Generatoren zur Energieerzeugung in Windenergieanlagen einzusetzen.

In Folge eines Lagerschadens kann es bei diesen vorkommen, dass der Läufer auf den Ständer aufsetzt, wodurch ein Totalschaden am Generator auftreten kann. Bei Windenergieanlagen ist einerseits ein Totalschaden des Generators mit erheblichen Kosten verbunden, andererseits kann der Generator nicht ständig durch eine Kontrollperson beobachtet werden.

Zur Früherkennung von Lagerschäden ist die Erfassung und Auswertung von Schwingungen und Stoßimpulsen vorgeschlagen worden. Dies ist allerdings kostenintensiv, da eine regelmäßige Fernerfassung des Zustands der Lager erfolgen und zur Begutachtung ein Fachmann herangezogen werden muss. Deshalb haben sich diese Schadenerkennungsverfahren nur in dem Bereich durchgesetzt, wo ein Generator- bzw. Motorausfall mit hohen Folgekosten verbunden ist. Dies ist beispielsweise bei der Papier- und Spanplattenproduktion der Fall, genauso wie bei großen Baggern im Tagebau.

Bei Windkraftanlagen sind derartige Erkennungsverfahren nicht üblich.

Die Aufgabe der Erfindung ist es, eine elektrische Maschine und einen Notstopschalter für eine solche Maschine anzugeben, die mit geringem Aufwand realisierbar sind.

Die Lösung dieser Aufgabe ist durch die in den Ansprüchen 1 und 10 angegebenen Merkmale gegeben. Die kennzeichnenden Merkmale der Unteransprüche gestalten die Maschine in vorteilhafter Weise weiter aus.

Die Lösung sieht vor, dass am Gehäuse ein Sensor fest angeordnet ist, der jeweils seinen Abstand zur Maschinenwelle erfasst und ein Signal abgibt, wenn dieser Abstand einen vorgegebenen Wert unter- oder überschreitet. Der vorgegebene Schwellwert wird so gewählt, dass ein geschädigtes Drehlager rechtzeitig erkannt werden kann.

Ein geschädigtes Drehlager ist sicherer erfassbar, wenn der Sensor im Bereich des Drehlagers angeordnet ist.

Die Sicherheit bei der Erfassung eines Drehlagerschadens wird erhöht, wenn der Sensor am Lagerschild oder Lagerdeckel des Gehäuses angeordnet ist.

Ein kostengünstiger Sensor ist als induktiver Näherungsschalter ausgebildet.

Zum Schutz der Maschine wird vorgeschlagen, dass das Signal einen Notstop auslöst.

Die Lösung sieht bezüglich des Notstopschalters vor, dass der Notstoppschalter einen am Gehäuse fest angeordneten Sensor umfasst, der jeweils seinen Abstand zur Maschinenwelle erfasst und ein Notstoppsignal abgibt, wenn dieser Abstand einen vorgegebenen Wert unter- oder überschreitet.

Die Erfindung wird nachfolgend anhand einer Zeichnung beschreiben.

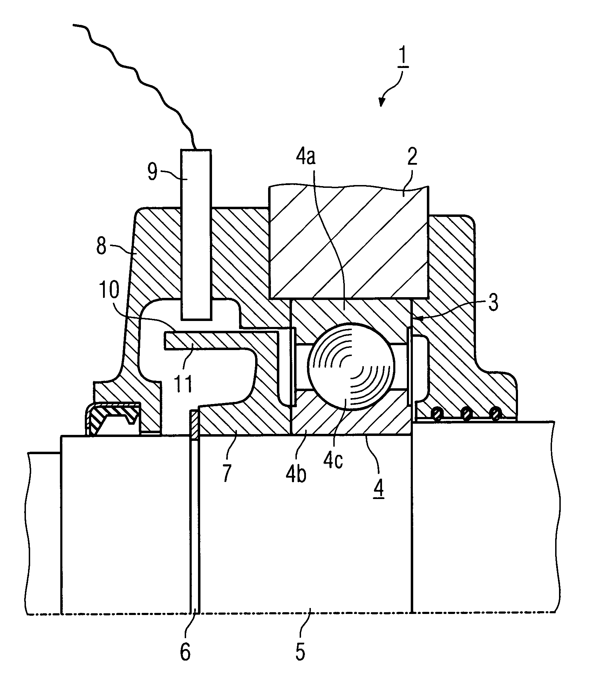

Die einzige Figur zeigt einen Ausschnitt aus einem Längsschnitt einer elektrische Maschine 1 in einer schematisierten Darstellung.

Die elektrische Maschine 1 befindet sich in einem nicht gezeigten Gehäuse, welches stirnseitig jeweils durch ein Lagerschild 2 verschlossen ist. In dem Lagerschild 2 befindet sich eine zylindrische Aufnahmeöffnung 3, in die ein Drehlager 4 axial gesichert eingesetzt ist. Bei dem Drehlager 4 handelt es sich um ein Wälzlager mit einem äußeren Lagerring 4a und einem inneren Lagerring 4b, zwischen denen als Wälzkörper Kugeln 4c angeordnet sind. In die zylindrische Öffnung des inneren Lagerrings 4b ist eine Maschinenwelle 5 eingesteckt, die sich über das Drehlager am Lagerschild 2 und damit am Gehäuse der Maschine 1 abstützt.

Zur axialen Sicherung des Drehlagers 4 dient ein Sicherungsring 6, der das Drehlager 4 über einen Druckring 7 festlegt. Zum Schutz gegen äußere Einflüsse ist das Drehlager 4 mittels eines Lagerdeckels 8 abgedeckt. Ein im Deckel angeordneter Sensor 9 erfasst den Abstand zur Maschinenwelle 5, indem er fortlaufend den Abstand zum Druckring 7 ermittelt, der hierzu eine Messfläche 10 aufweist. Die Messfläche 10 ist an einem am Druckring 7 vorgesehenen Vorsprung 11 angeordnet, der dem Sensor 9 unmittelbar gegenüberliegt. Der Druckring 7 sitzt auf der Welle 5; eine Bewegung der Maschinenwelle 5 quer zur Längsachse aufgrund des geschädigten Drehlagers 4 ist mit einer entsprechenden Bewegung des Druckrings 7 verbunden und wird vom Sensor 9 erfasst.

Der Sensor 9 gehört zu einem Notstopschalter, welcher die Maschine sofort ausschaltet, wenn das vom Sensor abgegebene Abstandssignal einen vorgegebenen Schwellwert unter- oder überschreitet. Das Sensorsignal löst das Notstopsignal hier direkt aus.

## Patentansprüche

1. Elektrische Maschine (1), insbesondere Generator für eine Windenergieanlage,
mit einem eine Statorwicklung tragenden Stator, der in einem Gehäuse drehfest um einen mit einer Läuferwicklung versehenen Läufer herum angeordnet ist, welcher auf einer über Drehlager (4) am Gehäuse abgestützten Maschinenwelle (5) sitzt,
**dadurch gekennzeichnet,**
**dass** am Gehäuse ein Sensor (9) fest angeordnet ist, der jeweils seinen Abstand zur Maschinenwelle (5) erfasst und ein Signal abgibt, wenn dieser Abstand einen vorgegebenen Wert unter- oder überschreitet.

2. Elektrische Maschine nach Anspruch 1,
**dadurch gekennzeichnet,**
**dass** der Sensor (9) im Bereich eines Drehlagers (4) angeordnet ist.

3. Elektrische Maschine nach Anspruch 1,
**dadurch gekennzeichnet,**
**dass** der Sensor (9) am Lagerschild (2) oder Lagerdeckel (8) des Gehäuses angeordnet ist.

4. Elektrische Maschine nach Anspruch 1,
**dadurch gekennzeichnet,**
**dass** der Sensor (9) als induktiver Näherungsschalter ausgebildet ist.

5. Elektrische Maschine nach Anspruch 1,
**dadurch gekennzeichnet,**
**dass** das Signal einen Notstopp der Maschine (1) auslöst.

6. Notstoppschalter für eine elektrische Maschine (1), insbesondere einen Generator für eine Windenergieanlage,
die einen eine Statorwicklung tragenden Stator aufweist, der in einem Gehäuse drehfest um einen mit einer Läuferwicklung versehenen Läufer herum angeordnet ist, welcher auf einer über Drehlager (4) am Gehäuse abgestützten Maschinenwelle (5) sitzt,
**dadurch gekennzeichnet,**
**dass** der Notstoppschalter einen am Gehäuse fest angeordneten Sensor (9) umfasst, der jeweils seinen Abstand zur Maschinenwelle (5) erfasst und ein Notstoppsignal abgibt, wenn dieser Abstand einen vorgegebenen Wert unter- oder überschreitet.
